# EUROPEAN PATENT APPLICATION

(11) **EP 2 362 512 A1**
(43) Date of publication of application: **31.08.2011**
(21) Application number: 10001727.6
(22) Date of filing: 19.02.2010
(51) Int. Cl.: H02G 13/00, B61L 1/00

(54) **Lightning protection for a railway control center**

(71) Applicant: Thales Deutschland GmbH, 70435 Stuttgart (DE)
(72) Inventor: Oldewurtel, Kassen, 71706 Markgröningen (DE); Tugendhat, Peter, 71686 Remseck (DE); Leyhausen, Thomas, 73732 Esslingen (DE); Ohle, Michael, 70499 Stuttgart (DE)
(74) Representative: Kohler Schmid Möbus

(57) **Abstract**

A method for operating a lightning protection system (1) of a railway control center (2), the system (1) comprising
at least one signal line (5-8) leading into the indoor installations (4) of the railway control center (2),
and a ground lead (15-18) which connects the signal line (5-8) with earth (10) through an overvoltage arrester (11-14),
is characterized in that
current peaks occurring in the ground lead (15-18) are counted. With the inventive method, the lightning protection of a railway control center, and thus the operational availability of the railway control center, can be improved.

## Description

The invention relates to a method for operating a lightning protection system of a railway control center, the system comprising
at least one signal line leading into indoor installations of the the railway control center,
and a ground lead which connects the signal line with earth through an overvoltage arrester.

A railway control center typically operates and monitors plenty of railway devices at or along railway lines, such as switches, signals or axle counters. In order to connect these devices (or outdoor installations) with the central control electronics (or indoor installations) located inside a building, there are plenty of signal lines running from these railway devices into the building.

However, since the railway devices at or along the railway lines are typically located in nature, these railway devices and their signal lines may be struck by lightning. Such a lightning strike typically causes a high voltage current running through the signal line, what endangers the indoor installations of the railway control center connected to it.

In order to keep a lightning current from damaging the indoor installations, it is known to connect the signal line with earth via an overvoltage arrester. The overvoltage arrester has a high resistance as long as the voltage across the overvoltage arrester is low, but has a low resistance when the voltage across the overvoltage arrester is high. A lightning current in the signal line connected to the overvoltage arrester causes a high voltage across the overvoltage arrester (as compared to earth), so the resistance of the overvoltage arrester becomes low, and the lightning current is discharged to ground.

However, typical overvoltage arresters used for lightning protection of railway control centers degrade upon use. If an overvoltage arrester is corrupted, and a lightning strike hits the signal line it is connected to for protection purposes, then said signal line may lead the lightning current into the indoor installations and damage them, what typically renders the railway control center inoperative.

In order to find corrupted overvoltage arresters, it is common to check and/or replace overvoltage arresters according to inspection timetables. For example, once a year all overvoltage arresters of a particular railway control center are checked. Although in some cases a corruption of an overvoltage arrester can be detected optically (e.g. in case of a melting), it is generally necessary to connect dedicated electronic equipment to the overvoltage arrester in order to identify a corrupted overvoltage arrester. Identified corrupted overvoltage arresters are exchanged.

However, the checking procedure is rather time consuming, and therefore expensive. Most of the checks will reveal no corruption of the checked overvoltage arresters. Even more expensive is a replacement of all overvoltage arresters without a check according to a time schedule, since most overvoltage arresters will be replaced without need. On the other hand, a corrupted overvoltage arrester may be exposed to a lightning current before the next inspection or maintenance occurs, so a lightning current may reach the indoor installations in this case, and make the railway control center inoperative.

### Obiect of the invention

It is the object of the invention to improve the lightning protection of a railway control center, and thus to improve the operational availability of a railway control center.

### Short description of the invention

This object is achieved, in accordance with the invention, by a method as introduced in the beginning, characterized in that current peaks occurring in the ground lead are counted.

As the basic idea of the invention, it is proposed to count the number of lightning strikes that have been discharged by a specific overvoltage arrester. Each lightning strike discharged via the overvoltage arrester comes along with a current peak in the ground lead belonging to the overvoltage arrester. So the number of current peaks in the ground lead is a measure for the previous exposure of the overvoltage arrester. Typically, an overvoltage arrester may safely discharge a limited number of lightning strikes. However, beyond that limited number, the risk of a fatal corruption of the overvoltage arrester increases, and the overvoltage arrester should be replaced or at least checked.

When the number of lightning strikes discharged by the overvoltage arrester are counted, then checking and replacement procedures may be focused on overvoltage arresters which have experienced a significant exposure since installation (or the last inspection). Unnecessary checks may be avoided. Further, and more important, a heavy exposure of single overvoltage arresters may easily be identified by the high number of counted current peaks; then a maintenance worker may be dispatched to check and/or replace this specific overvoltage arrester within a short time.

The ground lead and the overvoltage arrester are electrically connected in series; the overvoltage arrester may be located at one of the ends or in a middle part of the ground lead. Most conveniently, current peaks occurring in the ground lead are counted directly at the ground lead. However, in accordance with the invention, it is also possible to count the number of peaks occurring in the ground lead at the part of the signal line running from the outdoor installation to the point where the ground lead or the overvoltage arrester taps the signal line, since this part is connected in series with the ground lead as far as discharged lightning currents are concerned.

### Preferred variants of the invention

In a highly preferred variant of the inventive method, only current peaks with a current strength above a pre-defined threshold are counted. Weak lightning strikes (such as with a current strength below 1 kA) typically do not damage an overvoltage arrester significantly, and therefore may be ignored for estimating the degree of degradation of an overvoltage arrester. Thus, inspections may be scheduled more efficiently. The pre-defined threshold should be chosen in accordance with the characteristics of the overvoltage arrester monitored; for conventional overvoltage arresters used in railway control centers, 400 A to 4 kA, preferably about 1 kA, have been found useful.

An advantageous further development of this variant proposes that the counting is blocked for a pre-defined period of time following after the current strength of a current peak has exceeded said threshold. Some lightning strikes comprise several current peaks in quick sequence, but the exposure corresponds to a single lightning strike event. The measure of exposure can then be made more precise by this further development. The pre-defined period should be on the order of the duration of a typical lightning strike, i.e. in a range between 200 µs and 4000 µs.

Further preferred is a variant wherein a current strength in the ground lead is determined by measuring the magnetic field in the vicinity of the ground lead, in particular by electromagnetic induction or by Hall effect. The magnetic field may be measured contactless, and thus the counting electronics are safe from the high lightning currents. Note that as an alternative, the magnetic field may also be measured in the vicinity of the part of the signal line leading from the outdoor installations to the point where the ground lead or the overvoltage arrester tap the signal line.

In a highly preferred variant of the inventive method, the overvoltage arrester is checked and/or exchanged when a pre-defined number of current peaks have been counted that have been grounded via said overvoltage arrester. The predefined number is chosen in accordance with the characteristics of the overvoltage arrester (i.e. its degradation behaviour) and the local wheather conditions (i.e. the local range of strengths of lightning currents). Upon reaching the pre-defined number of discharged currents, there should still be a good chance that the overvoltage arrester is still operational, but the pre-defined number should be high enough to avoid unnecessary inspection efficiently. The pre-defined number is typically on the order of 3 to 5, but may also be 1 (e.g. in regions with particularly strong lightning strikes). Preferably, when the predefined number has been reached, a maintenance worker is dispatched immediately; it is also possible to dispatch the maintenance worker the next morning or after a few days. After having replaced an overvoltage arrester, the corresponding counting should start at zero again.

In another advantageous variant, when a pre-defined number of current peaks have been counted that have been grounded via said overvoltage arrester, the reaching of said pre-defined number of current peaks is indicated by a signal, in particular an optical, acoustic, electrical or radio signal. The signal may be used to alarm and dispatch a maintenance worker to check and/or replace the corresponding overvoltage arrester. The signal is preferably delivered to the railway control center (or the traffic superintendent). Alternatively or in addition to this variant, it is possible to have a constantly working display for the number of current peaks that have been grounded via a particular overvoltage arrester.

A preferred variant is characterized in that the system comprises several signal lines, each connected to an overvoltage arrester, and with a common ground lead part connecting said overvoltage arresters with earth,
wherein current peaks occurring in the common ground lead part are counted. Here the sum of currents for a group of overvoltage arresters is monitored in common. The number of counting and detection devices may be reduced in this way; however inspection and service should also be done for each of the overvoltage arresters monitored in common.

Also within the scope of the present invention is a lightning protection system for a railway control center, with at least one signal line,
wherein a ground lead connects the signal line with earth through an overvoltage arrester, characterized in that the system comprises a device for detecting and counting current peaks occurring in the ground lead. By means of the device, a measure for the number of current strikes discharged by the overvoltage arrester and thus for the degradation of the overvoltage arrester can be provided. This information can be used to do inspection and maintenance immediately when needed, in particular specifically for single overvoltage arresters or groups of overvoltage arresters monitored in common by the same device. Unnecessary inspections can be avoided. The ground lead and the overvoltage arrester are electrically connected in series; the overvoltage arrester may be located at one of the ends or in a middle part of the ground lead. Preferably, the device is galvanically isolated from the ground lead (and the signal line). The device is positioned to count (at least) all current peaks occurring in the ground lead.

In a highly preferred embodiment of the inventive lightning protection system, the device is arranged at or in the vicinity of the ground lead. This way, the device may register current peaks directly in the ground lead. This simplifies the detection, and avoids the counting of additional peaks (such as current peaks in the signal line that have not led to a discharging through the overvoltage arrester). Alternatively, and in accordance with the invention, the device may also be located at or in the vicinity of a part of the signal line leading from the external railway device to the point where the ground lead (or the overvoltage arrester) taps the signal line, since this part is connected in series with the ground lead as far as discharged lightning currents are concerned.

In a particularly preferred embodiment, the device comprises a measuring unit for determining a current strength in the ground lead, in particular by measuring the magnetic field in the vicinity of the ground lead. When (continuously) determining the current strength, current peaks may be easily identified. The current strength is typically determined indirectly (and preferably contactless), in particular via the magnetic field. The measuring unit may comprise an antenna, in particular an antenna coil, or a Hall probe, for measuring the magnetic field in the vicinity of the ground lead. Note that also the magnetic field at or in the vicinity of a part of the signal line leading from the external railway device to the point where the ground lead taps the signal line may be measured.

In a preferred further development of this embodiment, the device comprises a selection circuit allowing a counting of only those current peaks occurring in the ground lead for which the current strength has exceeded a pre-defined threshold. This avoids counting peaks that are irrelevant for the degradation of an overvoltage arrester.

Preferably in the case above, the device comprises a delay circuit for blocking the counting of current peaks for a pre-defined period of time following after the current strength in the ground lead has exceeded said threshold. This avoids a multiple counting of the same lightning strike.

In an advantageous embodiment, the device comprises a display for displaying the counted number of current peaks. By means of the display, it is possible to inform a maintenance worker about the previous exposure - and thus the approximate degree of degradation - of the monitored overvoltage arrester(s).

In a preferred embodiment, the device comprises
- a comparator circuit indicating when the counted number of current peaks has reached a pre-defined number, and
- a signal generator for generating a signal when the comparator circuit indicates that the counted number of current peaks has reached a pre-defined number, in particular wherein the signal generator is an optical, acoustic, electrical or radio signal generator. With the signal of the signal generator, a maintenance worker can be called immediately, thus reducing the risk that an overvoltage arrester is inoperable due to degradation upon use (i.e. discharging of too many lightning strikes).

Particularly preferred is an embodiment wherein the device comprises a resetting circuit for resetting the counted number of current peaks to zero. Typically, the device has a button or switch for activating the resetting circuit. The resetting circuit should be activated when the monitored overvoltage arrester has been replaced (exchanged) with a new one. The resetting allows a simple re-use of the device after a replacement of an overvoltage arrester, without need for keeping record of current peaks belonging to overvoltage arresters no more installed.

Particularly preferred is an embodiment characterized in that the system comprises several signal lines, with a first ground lead part for each signal line, wherein the first ground lead parts are connected to a common second ground lead part through an overvoltage arrester each, wherein the common second ground lead part is connected to earth,
and that the device is located at or in the vicinity of the common second ground lead part for counting current peaks occurring in the common second ground lead part. By this embodiment, the same device can be used to monitor several overvoltage arresters in common, what keeps costs low for the inventive monitoring. Note that a limiting number of current peaks indicating an inspection should be determined with respect to the degradation behaviour of a single overvoltage arrester, since all counted current peaks may belong to the same overvoltage arrester or signal line, respectively. In the embodiment, each overvoltage arrester is connected in series with its corresponding first ground lead part; said overvoltage arrester may be located at one of the ends or in a middle part of its corresponding first ground lead part.

In a preferred further development of this embodiment, the second ground lead part is designed as a rail, with the overvoltage arresters and the device being attached to the rail. This provides a simple and compact design.

Preferably, in the design above, the overvoltage arresters and/or the device are attached to the rail via a socket each, wherein said overvoltage arresters and/or devices are designed as pluggable modules, in particular wherein the sockets are clamped to the rail. The pluggable modules simplify the installation, replacement and removal (e.g. for inspection purposes). The clamping of the sockets simplifies the installation of the sockets. Preferably, there is only one socket type for both the overvoltage arresters and the.device. In order to work with the overvoltage arrester, a socket must offer a galvanic connection to the rail. In case this socket type is also used with the device, the device module does not plug into the receptacle(s) of the socket establishing the galvanic contact to the rail.

The invention also manifests in a railway control center equipped with an inventive lightning protection system. It is further noted that the inventive lightning protection system or one of its embodiments, as described above, may be operated with an inventive method or one of its variants, as described above.

Further advantages can be extracted from the description and the enclosed drawing. The features mentioned above and below can be used in accordance with the invention either individually or collectively in any combination. The embodiments mentioned are not to be understood as exhaustive enumeration but rather have exemplary character for the description of the invention.

### Drawing

The invention is shown in the drawing.
- Fig. 1: shows a schematic circuit diagram of an inventive lightning protection system, installed at a railway control center;
- Fig. 2: shows a schematic block circuit diagram of a device for detecting and counting current peaks, for use in an inventive lightning protection system;
- Fig. 3: shows a schematic perspective view of a rail with a clamped socket and a pluggable device module, for use in an inventive lightning protection system.

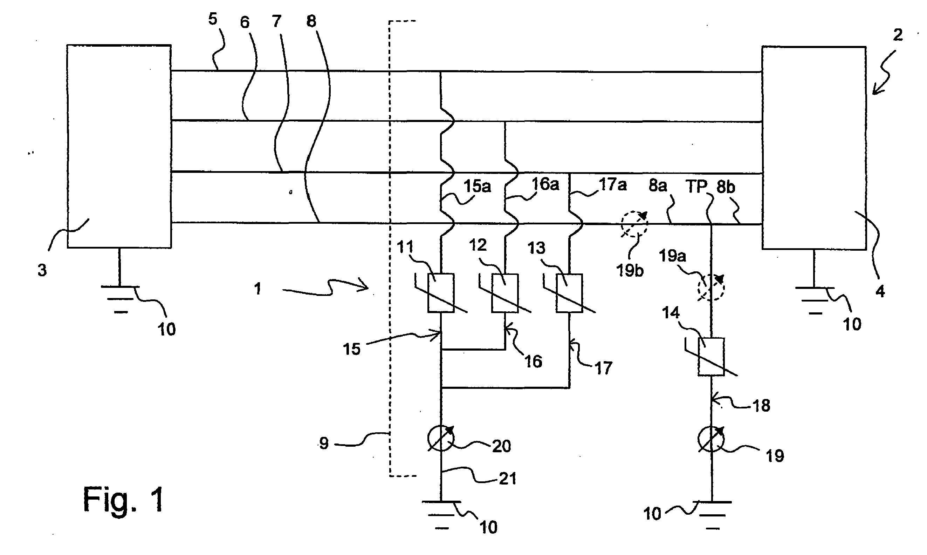

Fig.1 shows an inventive lightning protection system 1, installed at a railway control center 2. The railway control center 2 comprises outdoor installations 3, such as railway signals, signs, motorized bars at a railway crossing or other railway devices. These outdoor installations 3 are connected to indoor installations 4 of the railway control center 2, typically comprising electronic control facilities including computers, track diagram displays and control inputs, by means of signal lines 5, 6, 7, 8. With the signal lines 5-8, the indoor installations 4 communicate with the outdoor installations 3.

The outdoor installations 3 are typically grounded, so a lightning strike occurring at the outdoor installations 3 is discharged without endangering the indoor installations 4. However, if the outdoor installations 3 are not properly grounded, or if a lightning strike hits one or a plurality of the signal lines 5, 6, 7, 8 outside the wall 9 of the building in which the indoor installations 4 are housed, then a strong lightning current may run into the indoor installations 4, which may damage them and leave the railway control center 2 inoperative.

To prevent lightning currents from running into the indoor installations 4, the signal lines 5, 6, 7, 8 are connected to earth 10 by ground lines 15, 16, 17, 18 via overvoltage arresters 11, 12, 13, 14 each. The overvoltage arresters 11-14 may be realized with a series connection of a varistor and a gas discharge device (not shown in detail).

The overvoltage arresters 11-14 are in series with their respective ground lines 15-18, so the signal lines 5-8 are effectively connected to earth only when the voltage in the signal lines 5-8 exceed the threshold voltage at which the overvoltage arresters 11-14 become conductive. Thus the regular operation of the signal lines 5-8 is not impaired by the ground lines 15-18.

### Single monitoring

In order to monitor the exposure of the overvoltage arrester 14, in the example shown, the ground lead 18 is equipped with a device 19 for detecting and counting current peaks. If lightning strikes into signal line 8, the voltage at the overvoltage arrester 14 exceeds the threshold voltage such that the overvoltage arrester 14 becomes conductive. Then the lightning current is discharged through the ground line 18 into earth 10, what causes a current peak in the ground line 18, which is registered at the device 19.

Once a pre-defined number of current peaks, i.e. lightning strikes, have been counted at the device 19, it is immediately checked by a maintenance worker, and in case a severe degradation is detected, it may also be replaced immediately. This keeps the degree of lightning protection for the indoor installations 4 at a high level.

It should be noted that the device 19 may comprise several parts which are arranged at a distance from each other. For example, a first part of the device 19 which detects the current peaks (such as an antenna coil) should be arranged at or in the vicinity of the monitored line, but another part of the device 19 doing the counting may be located at a distance from the first part, e.g. in a control room of the railway control center. However, preferably, all parts of the device 19 are arranged in one (compact) housing.

Although an arrangement of the device 19 at the ground lead 18 electrically between the overvoltage arrester 14 and earth 10 is preferred, it is also possible to arrange the device before the overvoltage arrester 14, see dashed device 19a, or at (or in the vicinity of) the signal line 8 at a part 8a between the outdoor installations 3 and the point TP where (here) the ground lead 18 taps the signal line 8. A lightning strike discharged via the overvoltage arrester 14 will cause the same lightning current in this part 8a as in the ground lead 18.

### Common monitoring

In order to reduce the amount of devices for detecting and counting current peaks, it is possible to monitor a plurality of overvoltage arresters 11, 12, 13 in common with a single device 20.

For a common monitoring, the ground leads 15, 16, 17 each comprise first ground lead parts 15a, 16a, 17a, which tap their respective signal line 5, 6, 7 and contain their respective overvoltage arrester 11, 12, 13. The first ground lead parts 15a, 16a, 17a are united into a second, common ground lead part 21. At the common ground lead part 21, the device 20 is located for counting the current peaks occurring in the common ground lead part 21. Thus the sum of lightning strikes into the signal lines 5, 6, 7 is determined with the device 20.

When the number of current peaks counted at the device 20 has reached a critical value, a maintenance worker checks immediately all overvoltage arresters 11,12,13 connected to it.

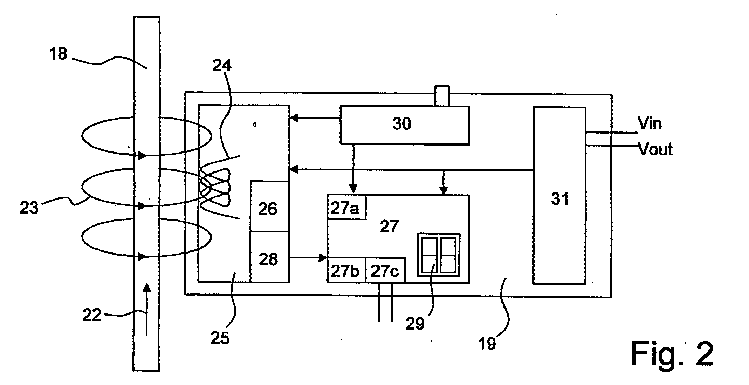

**Fig. 2** illustrates by way of example a device 19 for detecting and counting current peaks, for use in an inventive lightning protection system.

In a ground lead 18 (or a part of a signal line), a lightning current 22 is discharged, causing a magnetic field 23 around the ground lead 18. This magnetic field 23 induces a voltage in an antenna coil.24 of a measuring unit 25 of the device 19; for this purpose, the device 19 is arranged in the vicinity of the ground lead 18 so the magnetic field is strong enough for a detection within the device 19.

The measuring unit 25 derives a current strength of the lightning current from the induced voltage. By means of a selection circuit 26, all current peaks below a predefined threshold are filtered out, and the remaining strong peaks are signalled to a counting unit 27. The counting unit 27 comprises a buffered counting memory and a numeric display 29, indicating the number of counted (strong) current peaks. Note that a display may also be realized by LEDs signalling the counted number in binary code.

Further, by means of a delay circuit 28, strong peaks occurring within a predefined period of time after the most recent strong peak has been signalled to the counting unit 27 are filtered out and not signalled to the counting unit 27. In practice, this can be realised conveniently by a holding function.

By means of a comparator circuit 27b, the current number of counted current peaks is compared to a pre-defined (preferably programmable) number. As soon as the current number equals (or exceeds) the pre-defined number, a signal generator 27c gives an electrical signal onto its signal output; by means of an electrical line (not shown) this electrical signal can be conducted to e.g. a warning light at the controls of the railway control center, in order to alarm a maintenance worker.

The device 19 further comprises a test and reset switch 30. In the embodiment shown, a short pressing of the switch 30 simulates a detected (strong) current peak within the measuring unit 25, which allows a check of the counting function. A long pressing activates a resetting circuit 27a, which resets in the counting unit 27 the number of counted current peaks to zero.

The device 19 is powered via a filtered power supply 31, typically operating in a low voltage regime. The device 19 is galvanically isolated from the ground line 18, what prevents a damaging of the device 19 due to a lightning current occurring in the ground line 18.

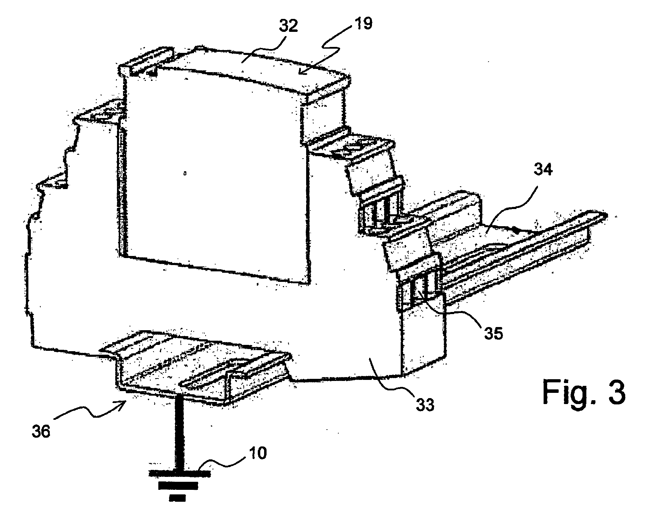

**Fig. 3** shows in a schematic perspective view a device 19 for detecting and counting current peaks, realized as a pluggable module 32 ("device module"). The pluggable module 32 is plugged into a socket 33, which is in turn clamped to a rail 34 of top hat rail type. The rail 34 acts as a ground lead (or more precise, typically as a second common ground lead part) in an inventive lightning protection system.

The socket 33 provides connectors 35 in particular for attaching external equipment, such as a voltage supply, or signal lines. The connectors 35 are in turn accessible for the plugged module 32 via receptacles (covered in Fig. 3) into which the module 32 is plugged in with legs (covered in Fig. 3).

When plugged into the clamped socket 33, the module 32 is close enough to the rail 34 to detect lightning currents discharged through it.

Sockets 33 shown in Fig. 3 may also be used to hold overvoltage arrester modules. On the bottom of the socket 33, there are (here) two electrical contacts to the rail 34, which can be accessed by a plugged module via a receptacle (covered in Fig. 3, note that device modules do not use these receptacles in order to keep a galvanic separation). The signal line is fed through the socket 33 via connectors 35 then.

When using overvoltage arrester modules and sockets, the first ground line parts (compare Fig. 1, Ref. 15a, 16a, 17a) comprise only some connections within the socket 33.

In practice, there are typically several sockets 33 for overvoltage arresters attached to the rail 34 in a row, and a single socket 33 for a device module 32 at the end 36 of the rail 34 connected to earth 10.

## Claims

1. Method for operating a lightning protection system (1) of a railway control center (2), the system (1) comprising
at least one signal line (5-8) leading into the indoor installations (4) of the railway control center (2),
and a ground lead (15-18) which connects the signal line (5-8) with earth (10) through an overvoltage arrester (11-14),
**characterized in that**
current peaks occurring in the ground lead (15-18) are counted.

2. Method according to claim 1, **characterized in that** only current peaks with a current strength above a pre-defined threshold are counted.

3. Method according to claim 2, **characterized in that** the counting is blocked for a pre-defined period of time following after the current strength of a current peak has exceeded said threshold.

4. Method according to one of the preceding claims, **characterized in that** a current strength in the ground lead (15-18) is determined by measuring the magnetic field (23) in the vicinity of the ground lead (15-18),
in particular by electromagnetic induction or by Hall effect.

5. Method according to one of the preceding claims, **characterized in that** the overvoltage arrester (11-14) is checked and/or exchanged when a predefined number of current peaks have been counted that have been grounded via said overvoltage arrester (11-14).

6. Method according to one of the preceding claims, **characterized in that** when a pre-defined number of current peaks have been counted that have been grounded via said overvoltage arrester (11-14), the reaching of said pre-defined number of current peaks is indicated by a signal, in particular an optical, acoustic, electrical or radio signal.

7. Method according to one of the preceding claims, **characterized in that** the system (1) comprises several signal lines (5-8), each connected to an overvoltage arrester (11-14), and with a common ground lead part (21) connecting said overvoltage arresters (11-14) with earth (10),
wherein current peaks occurring in the common ground lead part (21) are counted.

8. Lightning protection system (1) for a railway control center (2),
with at least one signal line (5-8),
wherein a ground lead (15-18) connects the signal line (5-8) with earth (10) through an overvoltage arrester (11-14),
**characterized in that**
the system (1) comprises a device (19, 19a, 19b, 20) for detecting and counting current peaks occurring in the ground lead (15-18).

9. System (1) according to claim 8, **characterized in that** the device (19, 19a, 19b, 20) is arranged at or in the vicinity of the ground lead (15-18).

10. system (1) according to claim 8 or 9, wherein the device (19, 19a, 19b, 20) comprises a measuring unit (25) for determining a current strength in the ground lead (15-18), in particular by measuring the magnetic field (23) in the vicinity of the ground lead (15-18).

11. System (1) according to claim 10, **characterized in that** the device (19, 19a, 19b, 20) comprises a selection circuit (26) allowing a counting of only those current peaks occurring in the ground lead (15-18) for which the current strength has exceeded a pre-defined threshold.

12. System (1) according to claim 11, **characterized in that** the device (19, 19a, 19b, 20) comprises a delay circuit (28) for blocking the counting of current peaks for a pre-defined period of time following after the current strength in the ground lead (15-18) has exceeded said threshold.

13. System (1) according to one of the claims 8 to 12, **characterized in that** the system (1) comprises several signal lines (5-8), with a first ground lead part (15a, 16a, 17a) for each signal line (5-8), wherein the first ground lead parts (15a, 16a, 17a) are connected to a common second ground lead part (21) through an overvoltage arrester (11-14) each, wherein the common second ground lead part (21) is connected to earth (10),
and that the device (19, 19a, 19b, 20) is located at or in the vicinity of the common second ground lead part (21) for counting current peaks occurring in the common second ground lead part (21).

14. System (1) according to claim 13, **characterized in that** the second ground lead part (21) is designed as a rail (34), with the overvoltage arresters (11-14) and the device (19, 19a, 19b, 20) being attached to the rail (34).

15. System (1) according to claim 14, **characterized in that** the overvoltage arresters (11-14) and/or the device (19,19a, 19b, 20) are attached to the rail (34) via a socket (33) each, wherein said overvoltage arresters (11-14) and/or devices (19, 19a, 19b, 20) are designed as pluggable modules (32), in particular wherein the sockets (33) are clamped to the rail (34).
